# EUROPEAN PATENT SPECIFICATION

(11) **EP 0 565 827 B1**
(45) Date of publication and mention of the grant of the patent: **26.11.1997**
(21) Application number: 93102197.6
(22) Date of filing: 12.02.1993
(51) Int. Cl.: A23B 7/144

(54) **Refrigeration compartment and process for maintaining a controlled atmosphere**
Kühlbehälter und Verfahren zum Erhalten einer kontrollierten Atmosphäre
Compartiment frigorifique et procédé pour maintenir une atmosphère contrôlée

(30) Priority: 16.03.1992 IT MI920603
(43) Date of publication of application: 20.10.1993
(73) Proprietor: ISOLCELL ITALIA S.P.A., I-39055 Laives (BZ) (IT)
(72) Inventor: Pruneri, Dario, I-39100 Bolzano (IT); Villa, Ivano, I-39100 Bolzano (IT)
(74) Representative: Forattini, Amelia

(56) References cited:
- DE-A- 1 817 403
- DE-B- 1 922 997
- FR-A- 2 523 472
- GB-A- 2 181 364

## Description

The present invention relates to a process for maintaining, in a refrigeration compartment for the preservation or accelerated ripening of fruit or vegetables, a controlled atmosphere in which the oxygen content is kept below 5% and preferably below 3% and the carbon dioxide content is kept below 4% and preferably below 2%. The invention furthermore relates to a refrigeration compartment which allows to perform this process.

In particular, a refrigeration compartment according to the field of the present invention includes:
(a) a pair of carbon dioxide absorption chambers which operate alternately, so that when one chamber in active mode absorbs the carbon dioxide contained in the refrigeration compartment the other chamber, in regeneration mode, is regenerated with atmospheric air; each chamber is provided with a supply duct for connection either to the refrigeration compartment or to atmospheric air and with an output duct for connection either to the outside atmosphere or to the refrigeration compartment;
(b) a pair of four-way switching valve means, arranged respectively upstream and downstream with respect to the pair of chambers so that it is possible to switch the destinations of the input and output ducts of the two chambers every time it is necessary to regenerate the chamber in active mode and simultaneously activate the chamber in regeneration mode;
(c) a pair of blower means to cause gas flows to transit through the two chambers.

Particularly, a process according to the field of the present invention includes the following steps:
(a) in which the controlled atmosphere of the refrigeration compartment is made to flow, by the blower means, through the active chamber and then redirected into the refrigeration compartment, and in which pure atmospheric air is made to flow, by the blower means, through the chamber being regenerated and then returned into the atmosphere;
(b) in which the upstream valve means is actuated so as to reverse the connections of the supply ducts of the pair of chambers;
(c) in which the downstream valve means is actuated so as to reverse the connections of the output ducts of the pair of chambers.

According to the field of the present invention, it is furthermore possible to use a single chamber to absorb carbon dioxide instead of two. Naturally, in this case the single chamber operates alternately so as to absorb carbon dioxide or be regenerated with atmospheric air.

The above is in summary the main field of industrial use of the invention, but does not constitute a limitation of its scope, since the apparatus according to the invention, particularly as hereinafter described and claimed, can be advantageously used in any other equivalent field in which one wishes to maintain a controlled atmosphere in a closed chamber.

Swiss patent no. 506318 describes a process and an apparatus for maintaining a controlled atmosphere in a closed compartment; the process and the apparatus work by means of one or two carbon dioxide absorption chambers which are made to operate alternately. However, in practice it has been demonstrated, as described hereinafter, that in this manner a sudden increase in oxygen content is observed in the chambers every time the chambers are switched. This increase is much higher than the above mentioned values, thus compromising the possibility of maintaining the required oxygen and carbon dioxide content in the compartment and of storing the fruit and vegetables adequately.

GB-A-2181364 discloses a method and apparatus for controlling the atmosphere in fruit stores wherein the regenerated bed is first evacuated and then exposed to a gas mixture with O₂ and N₂, in fruit store proportions.

Also FR-A-2523472 discloses an apparatus for absorbing carbon dioxide, in a controlled atmosphere container, wherein a preflush step is performed.

An object of the present invention is therefore to provide a process and an apparatus which allow to maintain the oxygen content in the refrigeration compartment constantly below the mentioned values, even when the two chambers are switched.

Another object of the invention is to maintain in the refrigeration compartment a very low oxygen and carbon dioxide content, particularly lower than 2% and precisely around 1%.

Another object of the invention is to provide an extremely simple system which can also be used with containers provided with a controlled atmosphere, which are transported on ships for very long periods without the availability of personnel capable of performing any sort of technical assistance and without the availability of equipment apart from the simple availability of electric power.

This aim, these objects and others are achieved, according to a first aspect, by the process according to the invention for maintaining, in a refrigeration compartment for the preservation or accelerated ripening of fruit or vegetables, a controlled atmosphere in which the oxygen content is kept below 5% and preferably below 3% and the carbon dioxide content is kept below 4% and preferably below 2%, the refrigeration compartment comprising:
(a) a pair of carbon dioxide absorption chambers which operate alternately, so that when one chamber in the active mode absorbs the carbon dioxide contained in the refrigeration compartment, the other chamber, in the regeneration mode, is regenerated with atmospheric air, each chamber being provided with a supply duct for connection either to the refrigeration compartment or to atmospheric air, and with an output duct for connection either to the outside atmosphere or to the refrigeration compartment;
(b) a pair of four-way switching valve means arranged respectively upstream and downstream of the pair of chambers so as to allow switching of the destinations of the input and output ducts of the two chambers every time it is necessary to regenerate the chamber in active mode and simultaneously activate the regenerated chamber;
(c) a pair of blower means to cause gas flows to transit through the two chambers;
   the process comprising the following steps:
(d) in which the controlled atmosphere of the refrigeration compartment is made to flow, by the blower means, through the active chamber and is then sent back into the refrigeration compartment, and in which pure atmospheric air is made to flow by the blower means through the chamber being regenerated and is then returned into the atmosphere;
(e) wherein the upstream valve means is actuated so as to reverse the connections of the supply ducts of the pair of chambers;
(f) wherein the blower means is deactivated, before said chambers are completely filled and before the atmospheric air can enter said refrigeration compartment;
(g) wherein a flow of nitrogen is made to pass through the regenerated chamber;
(h) wherein the downstream valve means is actuated so as to reverse the connections of the output ducts of the pair of chambers;
(i) wherein the blower means is reactivated.

Preferably, after step (e) and before step (f), a flow of gas arriving from the refrigeration compartment is made to pass through the regenerated chamber. In this manner it is possible to reduce nitrogen consumption.

According to another aspect of the process according to the invention, the refrigeration compartment comprises:
(a) a carbon dioxide absorption chamber which operates alternately, so that when the chamber is active it absorbs the carbon dioxide contained in the refrigeration compartment and so that when the chamber is in regeneration mode it is regenerated with atmospheric air; the chamber is provided with a supply duct for connection either to the refrigeration compartment or to atmospheric air, and with an output duct for connection either to the outside atmosphere or to the refrigeration compartment;
(b) a pair of three-way switching valve means arranged respectively upstream and downstream of the chamber, so as to be able to switch the destinations of the output and input ducts of the chamber;
(c) blower means to cause gas flows to transit through the chamber;
   the process comprising the following steps:
(d) in which pure atmospheric air is made to flow, by the blower means, through the chamber and then returned into the atmosphere to perform regeneration;
(e) wherein the upstream valve means is actuated so as to reverse the connections of the supply ducts of the chamber;
(f) wherein the blower means is deactivated;
(g) wherein a flow of nitrogen is made to pass through the regenerated chamber;
(h) wherein the downstream valve means is actuated so as to reverse the connections of the output ducts of the pair of chambers;
(i) wherein the blower means is reactivated.

Preferably, the duration of step (g) is comprised between 4 and 35 seconds, preferably between 8 and 25 seconds. It has in fact been observed that this duration allows both reduced nitrogen consumption and reduced increase in the oxygen content in the refrigeration compartment after each switching operation.

Preferably, the time comprised between step (e) and step (f) is comprised between 5 and 45 seconds, preferably between 10 and 32 seconds. This delay is in fact very convenient, since it allows to pre-flush the already-regenerated chamber with the gas contained in the refrigeration compartment. In this manner the demand of nitrogen for the subsequent step (g) can be reduced substantially.

Preferably, the time comprised between step (e) and step (g) is comprised between 15 and 50 seconds, preferably between 20 and 35 seconds. It has in fact been observed that after the deactivation of the blower means it is convenient to wait some time before starting the nitrogen flushing step (g).

Preferably, the time comprised between step (e) and step (h) is comprised between 25 and 90 seconds, preferably between 35 and 55 seconds.

According to another aspect, the present invention provides a refrigeration compartment for the preservation or accelerated ripening of fruit or vegetables, provided with a controlled atmosphere in which the oxygen content must be kept below 5% and preferably below 3% and in which the carbon dioxide content must be kept below 4% and preferably below 2%; the refrigeration compartment includes:
(a) a pair of carbon dioxide absorption chambers which operate alternately so that when one chamber, in the active mode, absorbs the carbon dioxide contained in the refrigeration compartment, the other chamber, in regeneration mode, is regenerated with atmospheric air, each chamber being provided with a supply duct for connection either to the refrigeration compartment or to atmospheric air, and with an output duct for connection either to the external atmosphere or to the refrigeration compartment;
(b) a pair of four-way switching valve means arranged respectively upstream and downstream of the pair of chambers so as to be able to switch the destinations of the output and input ducts of the two chambers every time it is necessary to regenerate the active chamber and simultaneously activate the regenerated chamber;
(c) a pair of blower means to cause the gas flows to transit through the two chambers;
(d) third valve means for opening or closing a connection between a nitrogen source and the regenerated chamber.
(e) a one-way valve means which is open in the direction of the flow of said blower means and is arranged upstream with respect to said connection to a nitrogen source.

Further characteristics and advantages of the invention will be more readily apparent from the description of a preferred embodiment of the invention, illustrated only by way of non-limitative example in the accompanying drawings, wherein:
Figure 1 is a schematic view of the circuit connected to the refrigeration compartment according to the invention;
Figure 2 is a diagram which plots the variation of the oxygen content in time in a carbon dioxide absorption chamber according to the known art; and
Figure 3 is a diagram which plots the variation of the oxygen content in time in a carbon dioxide absorption chamber according to the invention;
Figure 4 is a view of a second embodiment of the circuit connected to the refrigeration compartment according to the invention.

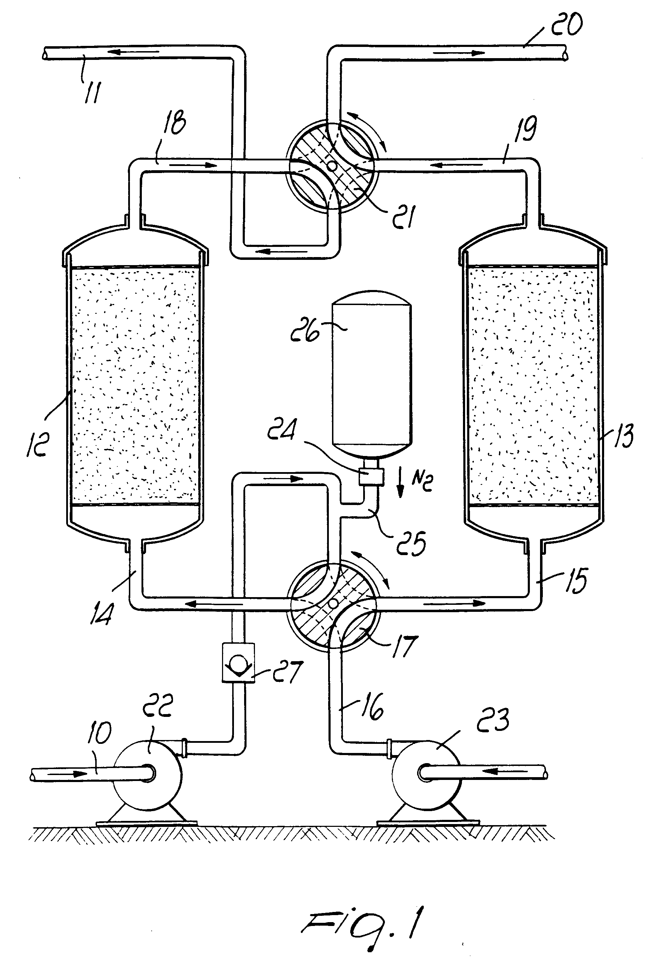

With reference to Figure 1, the refrigeration compartment, not shown in the figure for the sake of simplicity, is connected to the circuit shown in Figure 1 by means of the ducts 10 and 11. The carbon dioxide absorption chambers 12 and 13 are filled with activated carbon.

Each chamber 12 or 13 is provided with a supply duct, respectively 14 or 15, which can be connected either to the duct 10 which leads to the refrigeration compartment or to the duct 16 which leads to the outside atmosphere. The valve means 17 arranged upstream of the pair of chambers 12 and 13 is preset to perform this switching. In particular, in the position shown in solid lines, the valve means 17 connects the chamber 12 to the refrigeration compartment and the chamber 13 to the outside atmosphere and does the reverse in the position shown in broken lines.

Each chamber 12 or 13 is furthermore provided with an output duct, respectively 18 or 19, which can be connected either to the duct 11 which leads to the refrigeration compartment or to the duct 20 which leads to the outside atmosphere. The valve means 21 arranged downstream of the pair of chambers 12 and 13 is preset to perform this switching. In particular, in the position shown in solid lines, the valve means 21 connects the chamber 12 to the refrigeration compartment and the chamber 13 to the outside atmosphere, and does the reverse in the position shown in broken lines.

The blower means 22 and 23 draws gas respectively from the refrigeration compartment and from the outside atmosphere and injects it into the circuit in the direction indicated by the arrows.

The third solenoid valve means 24 allows to open or close a connection 25 between a source of nitrogen and the regenerated chamber 12 or 13. The nitrogen source can be constituted for example by a tank 26 which can be conveniently filled by obtaining nitrogen directly from the air, by means of a molecular separator of a per se known type. The connection 25 to the nitrogen tank 26 is arranged upstream with respect to the upstream switching valve means 17.

The one-way valve means 27 is open in the direction of the flow generated by the blower means 22 and is arranged upstream with respect to the connection 25 to the nitrogen tank 26.

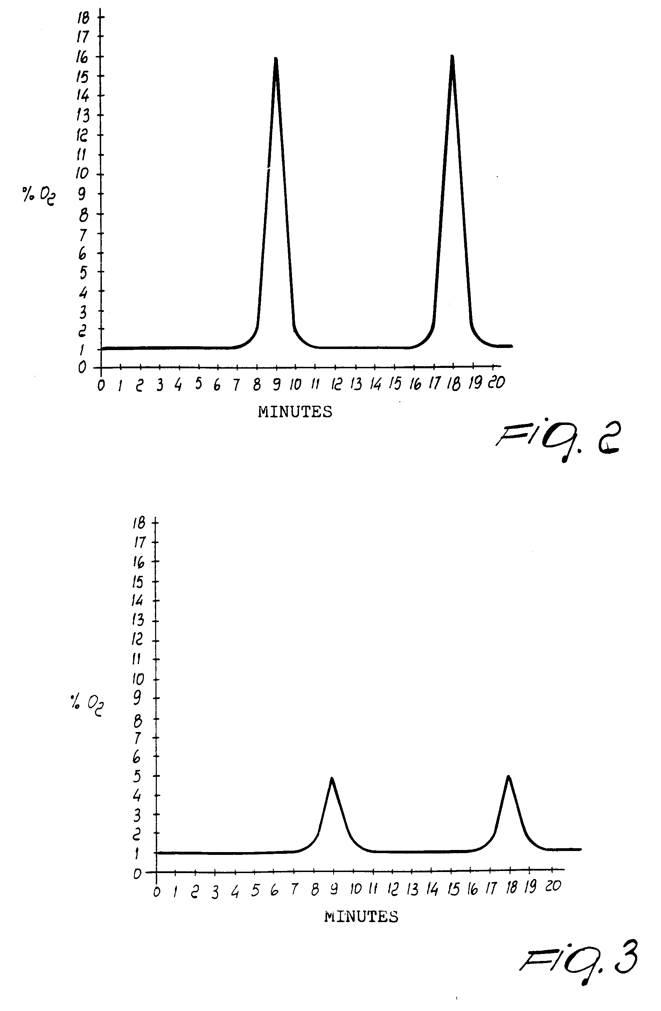

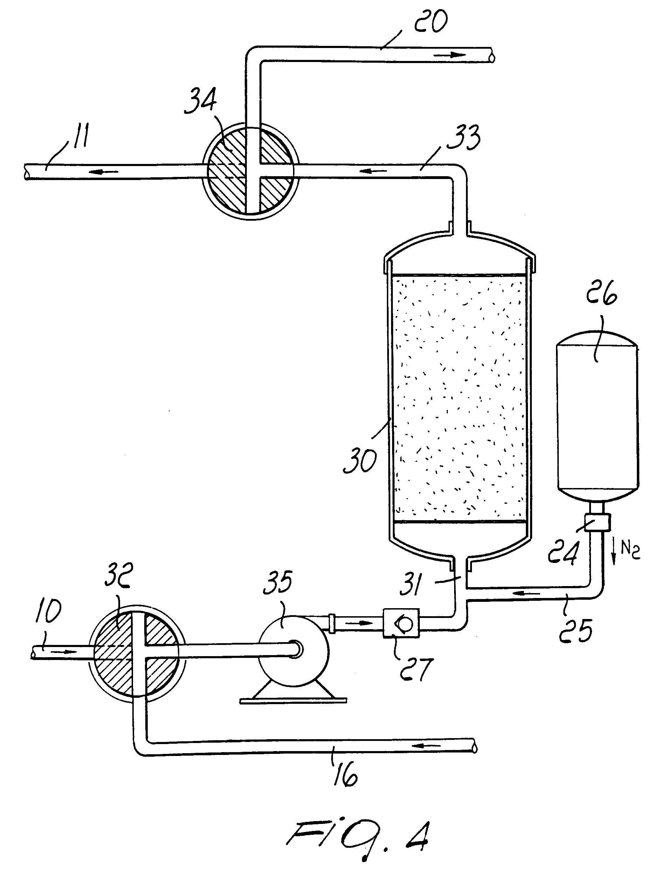

With reference to Figure 2, the figure shows that, according to the known art, the oxygen content cannot be controlled and reaches 16% every time the two chambers are switched. On the contrary, with reference to Figure 3, according to the invention, it is shown that it is possible to control the level of oxygen content and keep it for example below 3%.

With reference to Figure 4, the refrigeration compartment is connected to the circuit shown in Figure 4 by means of the ducts 10 and 11.

A chamber 30 is provided with a supply duct 31 which can be connected either to the duct 10 which leads to the refrigeration compartment or to the duct 16 which leads to the outside atmosphere. The valve means 32 arranged upstream of the chamber 30 is preset to perform this switching. In particular, in the position shown in solid lines, the valve means 32 connects the chamber 30 to the outside atmosphere; vice versa, in the position shown in broken lines, it connects the chamber 30 to the refrigeration compartment.

The chamber 30 is furthermore provided with an output duct 33 which can be connected either to the duct 11 which leads to the refrigeration compartment or to the duct 20 which leads to the outside atmosphere. The valve means 34 arranged downstream of the chambers 30 is preset to perform this switching. In particular, in the position shown in solid lines, the valve means 34 connects the chamber 30 to the outside atmosphere; vice versa, in the position shown in broken lines, it connects the chamber 30 to the refrigeration compartment.

The blower means 35 draws gas from the refrigeration compartment or from the outside atmosphere and injects it into the circuit in the direction indicated by the arrows.

The third solenoid valve means 24 allows to open or close a connection 25 between a nitrogen source and the chamber 30. The connection 25 to the nitrogen tank 26 is arranged downstream of the upstream switching valve means 32.

The one-way valve means 27 is open in the direction of the flow generated by the blower means 32 and is arranged upstream with respect to the connection 25 to the nitrogen tank 26.

The following non-limitative example further illustrates the process according to the invention.

### EXAMPLE

With reference to Figures 1 and 3, the switching valve means 17 and 21 is arranged in the position shown in solid lines. For the first seven minutes, the oxygen content is kept at the level of 1%, injecting atmospheric air if necessary as the fruit or vegetables use the oxygen present in the refrigeration compartment and produce carbon dioxide. The carbon dioxide is kept at the level of 1.1%, absorbing the excess carbon dioxide by means of the chamber 12 which is connected to the refrigeration compartment in a closed circuit.

The upstream valve means 17 is switched and is arranged in the position shown in broken lines, so that the destinations of the ducts 10 and 16 are reversed. In particular, the gas arriving from the refrigeration compartment enters the chamber 13 and starts to fill it, whereas atmospheric air starts to fill the chamber 12. After 21 seconds, before the chambers are completely filled (and before the atmospheric air can enter the refrigeration compartment), the blower means 22 and 23 is deactivated. 28 seconds after the switching of the valve means 17, the solenoid valve 24 is opened, starting the nitrogen flushing of the chamber 13. The solenoid valve 24 remains open for 13 seconds, after which it is closed. 45 seconds after the switching of the valve means 17, the downstream valve means 21 is also switched, the blower means 22 and 23 is reactivated and a new cycle thus begins.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Process for maintaining, in a refrigeration compartment for the preservation or accelerated ripening of fruit or vegetables, a controlled atmosphere in which the oxygen content is kept below 5% and preferably below 3% and the carbon dioxide content is kept below 4% and preferably below 2%, said refrigeration compartment comprising:
(a) a pair of carbon dioxide absorption chambers (12, 13) which operate alternately, so that when one chamber in the active mode absorbs the carbon dioxide contained in said refrigeration compartment, the other chamber, in the regeneration mode, is regenerated with atmospheric air, each chamber being provided with a supply duct (14, 15) for connection either to said refrigeration compartment or to atmospheric air, and with an output duct (18, 19) for connection either to the outside atmosphere or to said refrigeration compartment;
(b) a pair of four-way switching valve means (17, 21) arranged respectively upstream and downstream of said pair of chambers so as to allow switching of the destinations of the input and output ducts of said two chambers every time it is necessary to regenerate the chamber in active mode and simultaneously activate the regenerated chamber;
(c) a pair of blower means (22, 23) to cause gas flows to transit through said two chambers (12, 13);
said process comprising the following steps:
(d) wherein the controlled atmosphere of said refrigeration compartment is made to flow, by said blower means (22, 23), through said active chamber and is then sent back into said refrigeration compartment, and wherein pure atmospheric air is made to flow by said blower means (22, 23) through said chamber (12, 13) being regenerated and is then returned into the atmosphere;
(e) wherein said upstream valve means (17) is actuated so as to reverse the connections of the supply ducts (14, 15) of said pair of chambers;
(f) wherein said blower means is deactivated, before said chambers are completely filled and before the atmospheric air can enter said refrigeration compartment;
(g) wherein a flow of nitrogen is caused to pass through said regenerated chamber;
(h) wherein said downstream valve means (21) is actuated so as to reverse the connections of the output ducts of said pair of chambers;
(i) wherein said blower means (22, 23) is reactivated.

2. Process for maintaining, in a refrigeration compartment for the preservation or accelerated ripening of fruit or vegetables, a controlled atmosphere in which the oxygen content is kept below 5% and preferably below 3% and the carbon dioxide content is kept below 4% and preferably below 2%, said refrigeration compartment comprising:
(a) a carbon dioxide absorption chamber (30) which operates alternately, so that when said chamber (30) is active it absorbs the carbon dioxide contained in said refrigeration compartment and when said chamber is in regeneration mode it is regenerated with atmospheric air, said chamber being provided with a supply duct (31) for connection either to said refrigeration compartment or to atmospheric air, and with an output duct (20) for connection either to the outside atmosphere or to said refrigeration compartment;
(b) a pair of three-way switching valve means (32, 34) arranged respectively upstream and downstream of said chamber so as to be able to switch the destinations of the output and input ducts of said chamber;
(c) blower means (35) to cause gas flows to transit through said chamber;
said process comprising the following steps:
(d) in which pure atmospheric air is made to flow, by said blower means (35), through said chamber (30) and then returned to the atmosphere to perform regeneration;
(e) wherein said upstream valve means (32) is actuated so as to reverse the connections of the feed ducts of said chamber;
(f) wherein said blower means (35) is deactivated;
(g) wherein a flow of nitrogen is made to flow through said regenerated chamber (30);
(h) wherein said downstream valve means (34) is actuated so as to reverse the connections of the output ducts of said chamber;
(i) wherein said blower means (35) is reactivated.

3. Process according to claim 1 or 2, wherein a flow of gas arriving from said refrigeration compartment is made to transit through said regenerated chamber after said step (e) and before said step (f).

4. Process according to claim 1 or 2, wherein the time comprised between said step (e) and said step (h) is comprised between 25 and 90 seconds, preferably between 35 and 55 seconds.

5. Process according to claim 1 or 2, wherein the time comprised between said step (e) and said step (g) is comprised between 15 and 50 seconds, preferably between 20 and 35 seconds.

6. Process according to claim 1 or 2, wherein the time comprised between said step (e) and said step (f) is comprised between 5 and 45 seconds, preferably between 10 and 32 seconds.

7. Process according to claim 1 or 2, wherein the duration of said step (g) is comprised between 4 and 35 seconds, preferably between 8 and 25 seconds.

8. Process according to at least one of the preceding claims, wherein said chambers (12, 13, 30) are loaded with activated carbon.

9. Refrigeration compartment for the preservation or accelerated ripening of fruit or vegetables, provided with a controlled atmosphere wherein the oxygen content must be kept below 5% and preferably below 3% and wherein the carbon dioxide content must be kept below 4% and preferably below 2%, said refrigeration compartment comprising:
(a) a pair of carbon dioxide absorption chambers (12, 13) which operate alternately so that when one active chamber absorbs the carbon dioxide contained in said refrigeration compartment, the other chamber, in regeneration mode, is regenerated with atmospheric air, each chamber being provided with a supply duct (14, 15) for connection either to said refrigeration compartment or to atmospheric air, and with an output duct (18, 19) for connection either to the outside atmosphere or to said refrigeration compartment;
(b) a pair of four-way switching valve means (17, 21) arranged respectively upstream and downstream of said pair of chambers so as to be able to switch the destinations of the output and input ducts of said two chambers every time it is necessary to regenerate the active chamber and simultaneously activate the regenerated chamber;
(c) a pair of blower means (22, 23) to cause the gas flows to transit through said two chambers;
(d) third valve means (24) for opening or closing a connection between a nitrogen source and said regenerated chamber.
(e) a one-way valve means (27) which is open in the direction of the flow of said blower means and is arranged upstream with respect to said connection to a nitrogen source (26).

10. Refrigeration compartment for the preservation or accelerated ripening of fruit or vegetables, provided with a controlled atmosphere wherein the oxygen content must be kept below 5% and preferably below 3% and wherein the carbon dioxide content must be kept below 4% and preferably below 2%, said refrigeration compartment comprising:
(a) a carbon dioxide absorption chamber (30) which operates alternately, so that when said chamber is active it absorbs the carbon dioxide contained in said refrigeration compartment, and so that when said chamber is in regeneration mode it is regenerated with atmospheric air, said chamber being provided with a supply duct (31) for connection either to said refrigeration compartment or to atmospheric air, and with an output duct (33) for connection either to the outside atmosphere or to said refrigeration compartment;
(b) a pair of three-way switching valve means (32, 34) arranged respectively upstream and downstream of said chamber, so as to be able to switch the destinations of the output and input ducts of said chamber;
(c) blower means (35) to cause gas flows to transit through said chamber;
(d) third valve means (24) for opening or closing a connection between a nitrogen source and said regenerated chamber.
(e) a one-way valve means (27) which is open in the direction of the flow of said blower means and is arranged upstream with respect to said connection to a nitrogen source (26).

11. Refrigeration compartment according to claim 9, wherein said connection to said nitrogen source (26) is arranged upstream with respect to said upstream switching valve means.

12. Refrigeration compartment according to claim 10, wherein said connection to said nitrogen source (26) is arranged downstream with respect to said upstream switching valve means.

## Patentansprüche

1. Verfahren zum Aufrechterhalten einer kontrollierten Atmosphäre, in der der Sauerstoffgehalt unterhalb 5% und vorzugsweise unterhalb 3% und der Kohlendioxidgehalt unterhalb 4% und vorzugsweise unterhalb 2% gehalten wird, in einem Kühlbehälter zur haltbaren Aufbewahrung oder zum beschleunigten Reifen von Früchten oder Gemüsen, wobei der Kühlbehälter aufweist:
(a) ein Paar Kohlendioxidabsorptionskammern (12, 13), die abwechselnd arbeiten, so daß wenn eine Kammer im aktiven Modus das in dem Kühlbehälter enthaltene Kohlendioxid absorbiert, die andere Kammer im Regenerierungsmodus mit atmosphärischer Luft aufgefrischt wird, wobei jede Kammer mit einem Zufuhrkanal (14, 15) zum Anschluß entweder an den Kühlbehälter oder an atmosphärische Luft und mit einem Auslaßkanal (18, 19) zum Anschluß entweder an die äußere Atmosphäre oder an den Kühlbehälter ausgestattet ist;
(b) ein Paar Vierwege-Schaltventile (17, 21), die jeweils oberstromig und unterstromig von dem Paar von Kammern angeordnet sind, um das Umschalten der Zielrichtungen des Einlaß- und Auslaßkanals der beiden Kammern jedes Mal zu ermöglichen, wenn es notwendig ist, die Kammer im aktiven Modus aufzufrischen und gleichzeitig die regenerierte Kammer zu aktivieren;
(c) ein Paar Gebläseeinrichtungen (22, 23) zur Erzeugung von Gasströmen, die durch die beiden Kammern (12, 13) hindurchfließen sollen:
wobei das Verfahren die folgenden Schritte aufweist:
(d) die kontrollierre Atmosphäre des Kühlbehälters wird von den Gebläseeinrichtungen (22, 23) zum Fließen durch die aktive Kammer gebracht und dann in den Kühlbehälter zurückgeleitet, und die reine atmosphärische Luft wird von den Gebläseeinrichtungen (22, 23) zum Fließen durch die Kammer (12, 13), die wieder aufgefrischt wird, gebracht und dann in die Atmosphäre zurückgeführt;
(e) das oberstromige Ventil (17) wird betätigt, um die Anschlüsse der Zufuhrkanäle (14, 15) des Paars von Kammern umzukehren;
(f) die Gebläseeinrichtungen werden abgeschaltet, bevor die Kammern vollständig gefüllt sind und bevor die atmosphärische Luft in den Kühlbehälter gelangen kann;
(g) ein Stickstoffstrom wird zum Fließen durch die aufgefrischte Kammer gebracht;
(h) das unterstromige Ventil (21) wird betätigt, um die Anschlüsse der Auslaßkanäle des Paars von Kammern umzukehren;
(i) die Gebläseeinrichtungen (22, 23) werden reaktiviert.

2. Verfahren zum Aufrechterhalten einer kontrollierten Atmosphäre, in der der Sauerstoffgehalt unterhalb 5% und vorzugsweise unterhalb 3% und der Kohlendioxidgehalt unterhalb 4% und vorzugsweise unterhalb 2% gehalten wird, in einem Kühlbehälter zur haltbaren Aufbewahrung oder zum beschleunigten Reifen von Früchten oder Gemüsen, wobei der Kühlbehälter aufweist:
(a) eine Kohlendioxidabsorptionskammer (30), die abwechselnd arbeitet, so daß, wenn die Kammer (30) aktiv ist, sie das in dem Kühlbehälter enthaltene Kohlendioxid absorbiert, und, wenn die Kammer sich im Regenerierungsmodus befindet, sie mit atmosphärischer Luft aufgefrischt wird, wobei die Kammer mit einem Zufuhrkanal (31) zum Anschluß entweder an den Kühlbehälter oder an atmosphärische Luft und mit einem Auslaßkanal (20) zum Anschluß entweder an die äußere Atmosphäre oder an den Kühlbehälter ausgestattet ist;
(b) ein Paar Dreiwege-Schaltventile (32, 34), die jeweils oberstromig und unterstromig von der Kammer angeordnet sind, um das Umschalten der Zielrichtungen des Einlaß- und Auslaßkanals der Kammer zu ermöglichen;
(c) Gebläseeinrichtungen (35) zur Erzeugung von Gasströmen, die durch die Kammer hindurchfließen sollen;
wobei das Verfahren die folgenden Schritte aufweist:
(d) reine atmosphärische Luft wird von den Gebläseeinrichtungen (35) zum Fließen durch die Kammer (30) gebracht und dann in die Atmosphäre zurückgeführt, um eine Regenerierung zu erzeugen;
(e) das oberstromige Ventil (32) wird betätigt, um die Anschlüsse der Zufuhrkanäle der Kammer umzukehren;
(f) die Gebläseeinrichtungen (35) werden abgeschaltet;
(g) ein Stickstoffstrom wird zum Fließen durch die aufgefrischte Kammer (30) gebracht;
(h) das unterstromige Ventil (34) wird betätigt, um die Anschlüsse der Auslaßkanäle der Kammer umzukehren;
(i) die Gebläseeinrichtungen (35) werden reaktiviert.

3. Verfahren gemäß Anspruch 1 oder 2, bei dem ein von dem Kühlbehälter kommender Gasstrom nach dem Schritt (e) und vor dem Schritt (f) zum Fließen durch die aufgefrischte Kammer gebracht wird.

4. Verfahren gemäß Anspruch 1 oder 2, bei dem die Zeit zwischen dem Schritt (e) und dem Schritt (h) zwischen 25 und 90 Sekunden, vorzugsweise zwischen 35 und 55 Sekunden liegt.

5. Verfahren gemaß Anspruch 1 oder 2, bei dem die Zeit zwischen dem Schritt (e) und dem Schritt (g) zwischen 15 und 50 Sekunden, vorzugsweise zwischen 20 und 35 Sekunden liegt.

6. Verfahren gemaß Anspruch 1 oder 2, bei dem die Zeit zwischen dem Schritt (e) und dem Schritt (f) zwischen 5 und 45 Sekunden, vorzugsweise zwischen 10 und 32 Sekunden liegt.

7. Verfahren gemäß Anspruch 1 oder 2, bei dem die Dauer des Schrittes (g) zwischen 4 und 35 Sekunden, Vorzugsweise zwischen 8 und 25 Sekunden liegt.

8. Verfahren gemäß wenigstens einem der vorherigen Ansprüche, bei dem die Kammern (12, 13, 30) mit Aktivkohle beladen werden.

9. Kühlbehälter zur haltbaren Aufbewahrung oder zum beschleunigten Reifen von Früchten oder Gemüsen, der mit einer kontrollierten Atmosphäre ausgestattet ist, in der der Sauerstoffgehalt unterhalb 5% und vorzugsweise unterhalb 3% und der Kohlendioxidgehalt unterhalb 4% und vorzugsweise unterhalb 2% gehalten werden muß, wobei der Kühlbehälter aufweist:
(a) ein Paar Kohlendioxidabsorptionskammern (12, 13), die abwechselnd arbeiten, so daß wenn eine aktive Kammer das in dem Kühlbehälter enthaltene Kohlendioxid absorbiert, die andere Kammer im Regenerierungsmodus mit atmosphärischer Luft aufgefrischt wird, wobei jede Kammer mit einem Zufuhrkanal (14, 15) zum Anschluß entweder an den Kühlbehälter oder an atmosphärische Luft und mit einem Auslaßkanal (18, 19) zum Anschluß entweder an die äußere Atmosphäre oder an den Kühlbehälter ausgestattet ist;
(b) ein Paar Vierwege-Schaltventile (17, 21), die jeweils oberstromig und unterstromig von dem Paar von Kammern angeordnet sind, um das Umschalten der Zielrichtungen des Einlaß- und Auslaßkanals der beiden Kammern jedes Mal zu ermöglichen, wenn es notwendig ist, die aktive Kammer aufzufrischen und gleichzeitig die regenerierte Kammer zu aktivieren;
(c) ein Paar Gebläseeinrichtungen (22, 23) zur Erzeugung von Gasströmen, die durch die beiden Kammern hindurchfließen sollen;
(d) ein drittes Ventil (24) zum Öffnen und Schließen eines Anschlusses zwischen einer Stickstoffquelle und der regenerierten Kammer.
(e) ein Einwegeventil (27), das in der Richtung des Stromes der Gebläseeinrichtungen offen und oberstromig bezüglich des Anschlusses an eine Stickstoffquelle (26) angeordnet ist.

10. Kühlbehälter zur haltbaren Aufbewahrung oder zum beschleunigten Reifen von Früchten oder Gemüsen, der mit einer kontrollierten Atmosphäre ausgestattet ist, in der der Sauerstoffgehalt unterhalb 5% und vorzugsweise unterhalb 3% und der Kohlendioxidgehalt unterhalb 4% und vorzugsweise unterhalb 2% gehalten werden muß, wobei der Kühlbehälter aufweist:
(a) eine Kohlendioxidabsorptionskammer (30), die abwechselnd arbeitet, so daß, wenn die Kammer aktiv ist, sie das in dem Kühlbehälter enthaltene Kohlendioxid absorbiert, und so daß, wenn die Kammer sich im Regenerierungsmodus befindet, sie mit atmosphärischer Luft aufgefrischt wird, wobei die Kammer mit einem Zufuhrkanal (31) zum Anschluß entweder an den Kühlbehälter oder an atmosphärische Luft und mit einem Auslaßkanal (33) zum Anschluß entweder an die äußere Atmosphäre oder an den Kühlbehälter ausgestattet ist;
(b) ein Paar Dreiwege-Schaltventile (32, 34), die jeweils oberstromig und unterstromig von der Kammer angeordnet sind, um das Umschalten der Zielrichtungen des Einlaß- und Auslaßkanals der Kammer zu ermöglichen;
(c) Gebläseeinrichtungen (35) zur Erzeugung von Gasströmen, die durch die Kammer hindurchfließen sollen;
(d) ein drittes Ventil (24) zum Öffnen und Schließen eines Anschlusses zwischen einer Stickstoffquelle und der regenerierten Kammer.
(e) ein Einwegeventil (27), das in der Richtung des Stromes der Gebläseeinrichtungen offen und oberstromig bezüglich des Anschlusses an eine Stickstoffquelle (26) angeordnet ist.

11. Kühlbehälter gemäß Anspruch 9, bei dem der Anschluß an die Stickstoffquelle (26) oberstromig bezüglich des oberstromigen Schaltventils angeordnet ist.

12. Kühlbehälter gemäß Anspruch 10, bei dem der Anschluß an die Stickstoffquelle (26) unterstromig bezüglich des oberstromigen Schaltventils angeordnet ist.

## Revendications

1. Procédé pour maintenir, dans un compartiment frigorifique pour la conservation ou le mûrissement accéléré de fruits ou de légumes, une atmosphère contrôlée dans laquelle la teneur en oxygène est maintenue inférieure à 5 % et de préférence inférieure à 3 % et la teneur en gaz carbonique est maintenue inférieure à 4 % et de préférence inférieure à 2 %, ledit compartiment frigorifique comprenant :
(a) une paire de chambres (12, 13) d'absorption du gaz carbonique, qui fonctionnent en alternance de sorte que lorsqu'une chambre dans le mode actif absorbe le gaz carbonique contenu dans ledit compartiment frigorifique, l'autre chambre dans le mode de régénération est régénérée avec de l'air atmosphérique, chaque chambre étant pourvue d'un conduit d'alimentation (14, 15) destiné à être raccordé soit audit compartiment frigorifique soit à l'air atmosphérique, et comportant un conduit de sortie (18, 19) destiné à être raccordé soit à l'atmosphère extérieure, soit audit compartiment frigorifique ;
(b) un couple de moyens formant vannes de commutation à quatre voies (17, 21) disposées respectivement en amont et en aval dudit couple de chambres de manière à permettre une commutation des destinations des conduits d'entrée et de sortie desdites deux chambres chaque fois qu'il est nécessaire de régénérer la chambre dans le mode actif et d'activer simultanément la chambre régénérée ;
(c) une paire de moyens formant ventilateurs (22, 23) destinés à amener un courant de gaz à traverser lesdites deux chambres (12, 13) ;
ledit processus comprenant les étapes suivantes :
(d) l'atmosphère contrôlée dudit compartiment frigorifique est amenée à circuler, sous l'effet desdits moyens formant ventilateurs (22, 23), à travers ladite chambre active et est renvoyée ensuite dans ledit compartiment frigorifique, et de l'air atmosphérique pur est amené à circuler, sous l'action desdits moyens formant ventilateurs (22, 23), à travers ladite chambre (12, 13), qui est régénérée, puis est renvoyé dans l'atmosphère ;
(e) lesdits moyens formant vanne amont (17) sont actionnés de manière à inverser les raccords des conduits d'alimentation (14, 15) de ladite paire de chambre ;
(f) lesdits moyens formant ventilateurs sont désactivés, avant que lesdites chambres soient complètement remplies et avant que l'air atmosphérique puisse pénétrer dans ledit compartiment frigorifique ;
(g) un courant d'azote est amené à circuler dans ladite chambre régénérée ;
(h) lesdits moyens formant vanne aval (21) sont actionnées de manière à inverser les raccords des conduits de sortie de ladite paire de chambres ;
(i) lesdits moyens formant ventilateurs (22, 23) sont réactivés.

2. Procédé pour maintenir, dans un compartiment frigorifique pour la conservation ou le mûrissement accéléré de fruits ou de légumes, une atmosphère contrôlée dans laquelle la teneur en oxygène est maintenue inférieure à 5 % et de préférence inférieure à 3 % et la teneur en gaz carbonique est maintenue inférieure à 4 % et de préférence inférieure à 2 %, ledit compartiment frigorifique comprenant :
(a) une chambre (30) d'absorption du gaz carbonique, qui fonctionne alternativement de sorte que, lorsque ladite chambre (30) est active, elle absorbe le gaz carbonique contenu dans ledit compartiment frigorifique et, lorsque ladite chambre est dans le mode de régénération, elle est régénérée avec l'air atmosphérique, ladite chambre étant pourvue d'un conduit d'alimentation (31) destiné à être raccordé soit audit compartiment frigorifique, soit à l'air atmosphérique, et d'un conduit de sortie (20) pour réaliser le raccordement soit avec l'atmosphère extérieure, soit avec ledit compartiment frigorifique ;
(b) une paire de moyens formant vannes de commutation à trois voies (32, 34), disposés respectivement en amont et en aval de ladite chambre, de manière à pouvoir commuter les destinations des conduits de sortie et d'entrée de ladite chambre ;
(c) des moyens formant ventilateur (35) pour amener des courants de gaz à traverser ladite chambre ;
ledit procédé comprenant les étapes suivantes :
(d) de l'air atmosphérique pur est amené à circuler, sous l'action desdits moyens formant ventilateur (35), à travers ladite chambre (30), puis est renvoyé à l'atmosphère pour effectuer une régénération ;
(e) lesdits moyens formant vanne amont (32) sont actionnés de manière à inverser les raccords des conduits d'alimentation de ladite chambre ;
(f) les moyens formant ventilateur (35) sont désactivés ;
(g) un courant d'azote est amené à circuler dans ladite chambre régénérée (30) ;
(h) lesdits moyens formant vanne aval (34) sont actionnés de manière à inverser les raccords des conduits de sortie de ladite chambre ;
(i) lesdits moyens formant ventilateur (35) sont réactivés.

3. Procédé selon la revendication 1 ou 2, selon lequel un courant de gaz arrivant dudit compartiment frigorifique est amené à traverser ladite chambre régénérée après ladite étape (e) et avant ladite étape (f).

4. Procédé selon la revendication 1 ou 2, selon lequel l'intervalle de temps entre ladite étape (e) et ladite étape (h) est compris entre 25 et 90 secondes, de préférence entre 35 et 55 secondes.

5. Procédé selon la revendication 1 ou 2, selon lequel l'intervalle de temps entre ladite étape (e) et ladite étape (g) est compris entre 15 et 50 secondes, de préférence entre 20 et 35 secondes.

6. Procédé selon la revendication 1 ou 2, selon lequel l'intervalle de temps entre ladite étape (e) et ladite étape (f) est compris entre 5 et 45 secondes, de préférence entre 10 et 32 secondes.

7. Procédé selon la revendication 1 ou 2, selon lequel la durée de ladite étape (g) est comprise entre 4 et 35 secondes, de préférence entre 8 et 25 secondes.

8. Procédé selon au moins l'une des revendications précédentes, selon lequel lesdites chambres (12, 13, 30) sont chargées par du charbon activé.

9. Compartiment frigorifique pour la conservation ou le mûrissement accéléré de fruits ou de légumes, comportant une atmosphère contrôlée dans laquelle la teneur en oxygène doit être est maintenue inférieure à 5 % et de préférence inférieure à 3 % et la teneur en gaz carbonique doit être maintenue inférieure à 4 % et de préférence inférieure à 2 %, ledit compartiment frigorifique comprenant :
(a) une paire de chambres (12, 13) d'absorption du gaz carbonique, qui fonctionnent alternativement de sorte que lorsqu'une chambre active absorbe le gaz carbonique contenu dans ledit compartiment frigorifique, l'autre chambre dans le mode de régénération est régénérée avec l'air atmosphérique, chaque chambre étant pourvue d'un conduit d'alimentation (14, 15) pour le raccordement audit compartiment frigorifique ou à l'air atmosphérique, et d'un conduit de sortie (18, 19) pour le raccordement soit à l'atmosphère extérieure, soit audit compartiment frigorifique ;
(b) un couple de moyens formant vannes de commutation à quatre voies (17, 21) disposées respectivement en amont et en aval dudit couple de chambres de manière à permettre une commutation des destinations des conduits d'entrée et de sortie desdites deux chambres chaque fois qu'il est nécessaire de régénérer la chambre active et d'activer simultanément la chambre régénérée ;
(c) une paire de moyens formant ventilateurs (22, 23) destinés à amener un courant de gaz travers lesdites deux chambres (12, 13) ;
(d) des troisièmes moyens formant vanne (24) pour ouvrir ou fermer une liaison entre une source d'azote et ladite chambre régénérée ;
(e) des moyens formant vanne unidirectionnelle (27) qui sont ouverts dans le sens d'écoulement desdits moyens formant ventilateur et sont disposés en amont dudit raccord de liaison à une source d'azote (26).

10. Compartiment frigorifique pour la conservation ou le mûrissement accéléré de fruits ou de légumes, comportant une atmosphère contrôlée dans laquelle la teneur en oxygène doit être maintenue inférieure à 5 % et de préférence inférieure à 3 % et dans lequel la teneur en gaz carbonique doit être maintenue inférieure à 4 % et de préférence inférieure à 2 %, ledit compartiment frigorifique comprenant :
(a) une chambre (30) d'absorption du gaz carbonique, qui fonctionne alternativement de sorte que, lorsque ladite chambre est active, elle absorbe le gaz carbonique contenu dans ledit compartiment frigorifique et de sorte que, lorsque ladite chambre est dans le mode de régénération, elle est régénérée avec l'air atmosphérique, ladite chambre étant pourvue d'un conduit d'alimentation (31) destiné à être raccordé soit audit compartiment frigorifique, soit à l'air atmosphérique, et d'un conduit de sortie (33) pour réaliser le raccordement soit avec l'atmosphère extérieure, soit avec ledit compartiment frigorifique ;
(b) une paire de moyens formant vannes de commutation à trois voies (32, 34), disposés respectivement en amont et en aval en ladite chambre, de manière à pouvoir commuter les destinations des conduits de sortie et d'entrée de ladite chambre ;
(c) des moyens formant ventilateur (35) pour amener des courants de gaz à traverser ladite chambre ;
(d) des troisièmes moyens formant vanne (24) pour ouvrir ou fermer une liaison entre une source d'azote et ladite chambre régénérée ;
(e) des moyens formant vanne unidirectionnelle (27) qui sont ouverts dans le sens de l'écoulement desdits moyens formant ventilateur et sont disposés en amont dudit raccord de liaison à une source d'azote (26).

11. Compartiment frigorifique selon la revendication 9, dans lequel ledit raccord aboutissant à ladite source d'azote (26) est disposé en amont desdits moyens formant vanne de commutation amont.

12. Compartiment frigorifique selon la revendication 10, dans lequel ledit raccord aboutissant à ladite source d'azote (26) est disposé en aval desdits moyens formant vanne de commutation amont.
